# EUROPEAN PATENT APPLICATION

(11) **EP 4 545 945 A1**
(43) Date of publication of application: **30.04.2025**
(21) Application number: 23205810.7
(22) Date of filing: 25.10.2023
(51) Int. Cl.: G01N 17/04, G01N 17/00

(54) **CORROSION MONITORING**

(71) Applicant: ABB SCHWEIZ AG, 5400 Baden (CH)
(72) Inventor: Mäkelä, Tapio, 00740 Helsinki (FI); Eiroma, Kim, 00330 Helsinki (FI); Smolander, Maria, 02710 Espoo (FI)
(74) Representative: Kolster Oy Ab

(57) **Abstract**

A corrosion sensor is disclosed, comprising a mixture of corroding material and non-corroding material, wherein the corroding material and the non-corroding material are electrically conductive, the corroding material having higher electrical conductivity than the non-corroding material. An increase in the electrical resistance of the corrosion sensor, under exposure to corrosive gas that corrodes the corroding material, provides an indication of corrosion.

## Description

### FIELD OF THE INVENTION

The present invention relates to corrosion monitoring, and more particularly to a corrosion sensor.

### BACKGROUND ART

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

Corrosion refers to deterioration of metal due to chemical reactions between the metal and the environment. Corrosion of electronic components occurs under ambient conditions containing corrosive gases, which may cause electronic component failure or electronic system failure, operation downtime, and expensive repairs.

The presence of corrosive gases at ppb-level concentrations may be detected using indirect measurements performed on corroding metal sheets, such as corrosion coupons (e.g. by Corrosion Classification Coupon by Purafil), wherein off-line analysis tools are used for detecting the layer thickness of corroded crust formed on top of a corroding metal sheet, such as Ag, Cu or Fe. The thickness of the corroded layer may then be correlated with certain levels of corrosive gases.

In a visual inspection of Ag corrosion sensor, the silvery color of the Ag thin-film changes with respect to corrosive, sulfur-containing gases. The Ag corrosion sensor may be used to qualitatively distinguish between H₂S and reduced sulfur gas (S₈) by the length of a blackened region of the corrosion sensor, due to the different diffusivity of the gases in air, as H₂S leads to a longer black region due to its higher diffusivity. The concentration of the gas is qualitatively detected by the length of a yellow region of silver sulfide (Ag₂S).

However, such slow and cumbersome off-line measurements are not sufficient when it is necessary to respond to rapid changes in the ambient gas. In addition, the off-line measurements are not usable for detecting a chemical composition or relative concentration of the corrosive gases.

For on-line continuous monitoring of corrosive gases, the Ag corrosion sensor may be used in an electrical corrosion sensor, where a thin film of Ag is deposited on top of non-corroding base metal. The corroded Ag metal changes the resistor network resistance of the base metal and Ag thin film connected in parallel.

### SUMMARY

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the description below. Other features will be apparent from the description, and from the claims.

### BRIEF DESCRIPTION OF THE DRAWINGS

In the following the invention will be described in greater detail by means of preferred embodiments with reference to the attached drawings, in which
Figure 1 illustrates a printed Ag/C corrosion sensor layer on top of metal electrodes;
Figures 2a and 2b show test results regarding changes in electrical resistance measured for flexographically printed ink based corrosion sensors.

### DETAILED DESCRIPTION OF EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising", "containing" and "including" should be understood as not limiting the described embodiments to consist of only those features that have been mentioned and such embodiments may contain also features/structures that have not been specifically mentioned.

Although being a noble metal, silver may corrode in ambient atmosphere e.g. by reacting with sulfur-containing gases such as hydrogen sulfide (H₂S) and/or carbonyl sulfide. Copper is considered a noble metal; it resists attack by oxygen, although some air pollutants, such as H₂S, change its surface properties, even at ambient temperature. Copper sulphidation is a fast process occurring on the metal-gas phase interface impairing the corrosion resistance of copper, and leading to electric failures of electronic devices.

An aspect of the invention is a corrosion sensor comprising a mixture of corroding material and corrosion-resistant material, wherein the corroding material and the corrosion-resistant material are electrically conductive, the corroding material having higher electrical conductivity than the corrosion-resistant material, wherein an increase in the electrical resistance of the corrosion sensor, under exposure to corrosive gas that corrodes the corroding material, provides an indication of corrosion. Herein the corrosion-resistant material may also be referred to as non-corroding material.

In an embodiment, the corroding material is metal, such as Ag, Cu, Zn and/or Fe and/or any other metal that corrodes.

In an embodiment, the corrosion-resistant material is carbon. Herein "corrosion-resistant" or "non-corroding material" refers to material that is considerably less prone to corrosion compared to the corroding material. In an embodiment, the corrosion-resistant material is carbon in the form of graphite.

In an embodiment, the corrosion sensor may be in the form of composite printing ink or composite printing paste.

In an embodiment, the sensitivity of the corrosion sensor to the corrosive gas is dependent on the weight ratio of the corroding material to the non-corroding material in the corrosion sensor. The sensitivity of the corrosion sensor to the corrosive gas may increase with an increased weight ratio of the corroding material to the non-corroding material in the corrosion sensor. The sensitivity of the corrosion sensor to the corrosive gas may decrease with a decreased weight ratio of the corroding material to the non-corroding material in the corrosion sensor.

In an embodiment, the corrosive gas is at least one of SOz, H₂S, NO₂, Clz, Cl, NH₃, CH₃NH, and any derivative thereof.

In an embodiment, the weight ratio of the corroding material to the non-corroding material in the corrosion sensor is from 90/10 to 10/90, such as 80/20. This means the initial weight ratio. During use of the corrosion sensor, the weight ratio may change as the corroding material corrodes under exposure to corrosive gas(es), leading to a decreased proportion of the corroding material in the corrosion sensor.

In an embodiment, the corrosion sensor may be used for monitoring presence of a corrosive gas. The corrosion sensor may be in the form of composite printing ink printed on a substrate.

In an embodiment, the substrate is an electronic component.

In an embodiment, the corrosion sensor in the form of the composite printing ink is printed on the substrate in a composite printing ink layer thickness of 0.1 to 50 µm, preferably 0.1 to 20 µm, more preferably 0.1 to 10 µm.

In an embodiment, a method for monitoring presence of a corrosive gas, the method comprising depositing or attaching the corrosion sensor to a substrate, subjecting the corrosion sensor to an atmosphere to be monitored, and measuring an increase of electrical resistance in the corrosion sensor.

An embodiment discloses a corrosion sensor comprising a mixture of corroding material and non-corroding material. The corrosion sensor may comprise a printable mixture of the corroding material and the non-corroding material. In an embodiment, both the corroding material and non-corroding material electrically conductive Typically the corroding material has higher electrical conductivity compared to the non-corroding material. The difference in the conductivity is usable in the corrosion sensor to monitor the presence of corrosive gases in the atmosphere. As the corroding material corrodes, the electrical conductivity of the corrosion sensor changes, and thereby the electrical resistance of the corrosion sensor changes. The change in the resistance, i.e. the increase in the resistance of the corrosion sensor, may be measured by using an electrical resistance probe. The sensitivity of the corrosion sensor may be selected by selecting a certain mixing ratio and/or overall thickness of the resistor, and/or by selecting a certain noncorrosive and corrosive material combination.

The corroding material and non-corroding material may be mixed in different ratios as a printable paste or printable ink. The ink or paste may be applied as a thin layer on a suitable substrate, such as an electronic component, by using flexographic printing and/or another printing method, such as inkjet printing, gravure printing, laser printing, and/or screen printing. The higher the percentage of the corroding material in the mixture, the more sensitive the printed layer is to corrosion, even when the layer thickness is kept constant.

An embodiment enables low-cost, continuous monitoring of corrosive gases. An embodiment enables the use of the corrosive gas sensor as a replaceable corrosion sensor that may be changed when the corrosion sensor becomes fully corroded, or changes are made in the corrosive gas atmosphere to be monitored. Additionally, it is possible to adjust the sensitivity of the corrosion sensor by adjusting the proportion of the corroding material in the corrosion sensor.

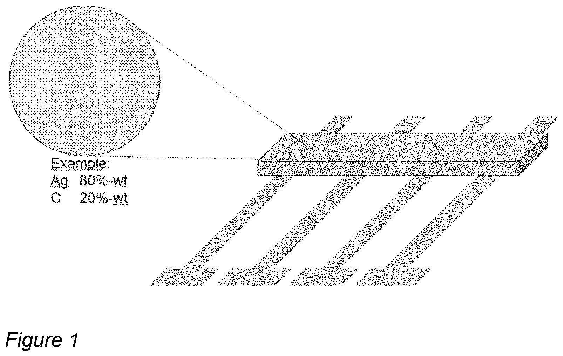

Silver (Ag) and carbon (C) inks may be printed on e.g. on metal electrodes. Figure 1 illustrates silver and carbon ink printed on metal electrodes.

In an embodiment, when preparing the ink or selecting a suitable ink for a specific corrosive gas atmosphere, for example, the corrosion sensor layer thickness may be fixed but the sensitivity may be varied by the Ag/C concentration, since Ag is more sensitive to corrosive gases. Other material combinations may be used as well, such as Cu/C, Zn/C, or Fe/C.

The adjustable corrosion sensor properties enable scalability of the preparation method as well as availability of corroding materials and non-corroding materials. The impedance level and sensitivity of the corrosion sensor may be varied by changing the mixing ratio of the corroding material and the corrosion resistant material. The impedance level and sensitivity of the corrosion sensor may also be varied by changing overall thickness of the resistor and by the selection of the non-corroding and corroding material combinations. For example, the corrosion sensor layer thickness may be kept constant while the Ag concentration is changed.

An embodiment enables in-situ corrosion measurements that provide real time information of corrosion behavior at operation conditions. The present invention enables printable, low-cost mass and manufacturable corrosion sensors.

An embodiment enables low cost, continuous monitoring of corrosion, specifically in the presence of corrosive gases. An embodiment enables a corrosion resistor sensor where the resistor thickness may be constant even when the sensitivity of the corrosion sensor for corrosive gases changes.

In an embodiment, the increase of the electrical resistance in the corrosion sensor may be measured using an ER (electrical resistance) probe. The ER probe may be used to measure the change in Ohmic resistance of the corrosion sensor exposed to the corrosive gas(es). The action of corrosion on the corrosion sensor produces a decrease in its cross-sectional area with a corresponding increase in its electrical resistance. The increase in electrical resistance may be related directly to metal loss, and the metal loss as a function of time is the corrosion rate. By ER probes, direct corrosion rates may be obtained. They respond quickly to corrosion upsets and may be used to trigger an alarm. The (increase of) electrical resistance may be measured/detected using Ohm's law and supplying constant current (voltage) and measuring voltage drop over (current through) the corrosion sensor.

### Example 1

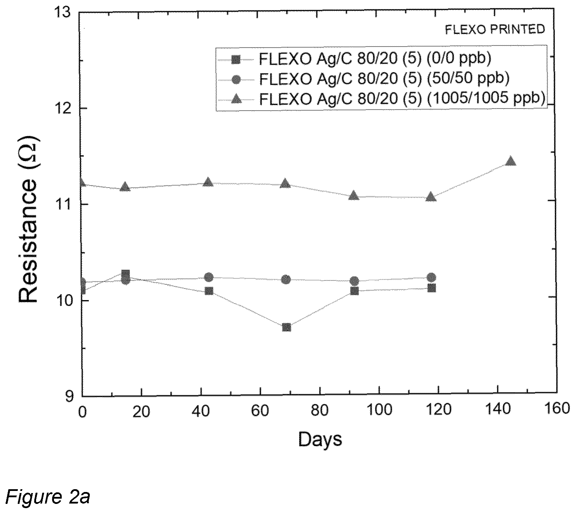

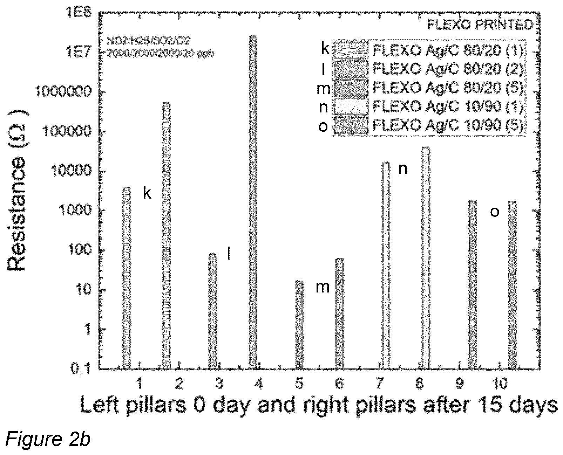

Flexographic printing inks were prepared, where silver (Ag) as corroding material and carbon (C) as non-corroding material were mixed as in different weight ratios. Ag and C may be used as nanoparticles or microparticles. The inks having the different Ag/C weight ratios of were printed on a PET substrate. Figures 2a and 2b show resistance changes of the different flexographically printed corrosion sensor layers in first (Figure 2a) test conditions, and second (Figure 2b) test conditions. As shown in Figures 2a and 2b, different Ag/C concentrations were sensitive for corrosion gases. In Figures 2a and 2b, ratios 80/20 and 10/90 in sample labelling indicate Ag/C mass ratio in the inks, and the numbers (5) or (1) in brackets indicate the number of flexographically printed layers. By varying the Ag/C ratio in the ink, a varying in the corrosion of the printed material in the presence of corrosive gases was observed by electrical resistance measurements.

The sensitivity to corrosive gases was increased by increasing the Ag concentration in the printing ink. The impedance level also changed by varying the layer thickness, i.e. by varying the number of printed layers of ink (higher layer thickness lead to lower impedance. Corrosion sensitivity (resistance change) could be tuned by the weight ratio of corroding material and/or by layer thickness. Flexographically printed Ag/C layers were observed to be able to be used as a corrosion sensor.

It will be obvious to a person skilled in the art that, as the technology advances, the inventive concept can be implemented in various ways. The invention and its embodiments are not limited to the examples described above but may vary within the scope of the claims.

## Claims

1. A corrosion sensor comprising
a mixture of corroding material and non-corroding material, wherein the corroding material and the non-corroding material are electrically conductive, the corroding material having higher electrical conductivity than the non-corroding material,
wherein an increase in the electrical resistance of the corrosion sensor, under exposure to corrosive gas that corrodes the corroding material, provides an indication of corrosion.

2. The corrosion sensor according to claim 1, wherein it is in the form of composite printing ink or composite printing paste.

3. The corrosion sensor according to claim 1 or 2, wherein the corroding material is metal, such as Ag, Cu, Zn and/or Fe.

4. The corrosion sensor according to claim 1, 2 or 3, wherein the non-corroding material is carbon.

5. The corrosion sensor according to any of the preceding claims, wherein the sensitivity of the corrosion sensor to the corrosive gas is dependent on the weight ratio of the corroding material to the non-corroding material in the corrosion sensor,
wherein the sensitivity of the corrosion sensor to the corrosive gas is increased with an increased weight ratio of the corroding material to the non-corroding material in the corrosion sensor,
wherein the sensitivity of the corrosion sensor to the corrosive gas is decreased with a decreased weight ratio of the corroding material to the non-corroding material in the corrosion sensor.

6. The corrosion sensor according to any of the preceding claims, wherein the corrosive gas is at least one of SOz and H₂S.

7. The corrosion sensor according to any of the preceding claims, wherein the weight ratio of the corroding material to the non-corroding material in the corrosion sensor is from 90/10 to 10/90.

8. A use of the corrosion sensor according to any of claims 1 to 7 for monitoring presence of a corrosive gas, wherein the corrosion sensor in the form of composite printing ink is printed on a substrate.

9. The use according to claim 8, wherein the substrate is an electronic component.

10. The use according to claim 8 or 9, wherein the corrosion sensor in the form of the composite printing ink is printed on the substrate in a composite printing ink layer thickness of 0.1 to 50 µm, preferably 0.1 to 20 µm, more preferably 0.1 to 10 µm.

11. A method for monitoring presence of a corrosive gas, the method comprising depositing a corrosion sensor according to any of claims 1 to 7 to a substrate, subjecting the corrosion sensor to an atmosphere to be monitored, and measuring an increase of electrical resistance in the corrosion sensor.
